(19) Europäisches Patentamt
European Patent Office
Office européen des brevets

(11) Veröffentlichungsnummer: **0 227 984**
**B1**

(12) # EUROPÄISCHE PATENTSCHRIFT

(45) Veröffentlichungstag der Patentschrift: **31.05.89**

(51) Int. Cl.⁴: **C 08 F 220/56,** C 08 F 226/02, C 08 F 220/06, C 04 B 24/26

(21) Anmeldenummer: **86117020.7**

(22) Anmeldetag: **08.12.86**

(54) **Wasserlösliche Polymerisate und deren Verwendung als Baustoffhilfsmittel.**

(30) Priorität: **21.12.85 DE 3545596**

(43) Veröffentlichungstag der Anmeldung: **08.07.87 Patentblatt 87/28**

(45) Bekanntmachung des Hinweises auf die Patenterteilung: **31.05.89 Patentblatt 89/22**

(84) Benannte Vertragsstaaten: **DE FR IT**

(56) Entgegenhaltungen: **EP-A-0 044 508**

(73) Patentinhaber: **Wolff Walsrode Aktiengesellschaft, Postfach, D-3030 Walsrode 1 (DE)**

(72) Erfinder: **Lange, Werner, Dr., Im Heidfeld 18, D-2722 Visselhövede (DE)**
Erfinder: **Höhl, Frank, Brochdorf 52, D-3044 Neuenkirchen (DE)**
Erfinder: **Szablikowski, Klaus, Dr., Claudiusstrasse 5, D-3030 Walsrode 1 (DE)**

(74) Vertreter: **Zobel, Manfred, Dr., c/o BAYER AG Konzernverwaltung RP Patentabteilung Bayerwerk, D-5090 Leverkusen (DE)**

EP 0 227 984 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue wasserlösliche Copolymerisate auf Basis von Acrylsäurederivaten und deren Verwendung als Baustoffhilfsmittel.

Das Verlegen von Nutzfußböden, z. B. Holzparkett, Fliesen oder Kunststoff-Fußbodenbelägen, kann nur auf horizontalen und absolut ebenen Fußboden-Oberflächen erfolgen. Bei der Erstellung von Gebäuden werden im Rohbau jedoch nur unebene Betonoberflächen erhalten, so daß aus diesem Grund üblicherweise auf diese unebenen Betondecken zunächst ein Estrich aufgebracht werden muß.

Während früher zur Herstellung der erforderlichen horizontalen und ebenen Oberflächen Estriche aus Gußasphalt, Zement oder Magnesit verwendet wurden, deren Aufbringen, Nivellieren und Glätten einen beträchtlichen Arbeitsaufwand mit sich brachte, sind seit einiger Zeit auch Mörtelmischungen bekannt, die nach Zugabe von Wasser eine fließ- und pumpfähige Konsistenz aufweisen und sich unter dem Einfluß der Schwerkraft wie eine Flüssigkeit auf den unebenen Fußboden selbst nivellieren und glätten.

So ist aus der DE-OS-1 943 634 eine Mortelmasse bekannt, die aus Anhydrit, gegebenenfalls Sand, einem Anreger, einem mit Sulfit oder Sulfonsäure modifiziertem Harz auf der Basis eines Amino-s-triazins mit mindestens 2 $NH_2$-Gruppen als festigkeitserhöhendem Zusatz, einem Netzmittel und gegebenenfalls einem Schaumverhütungsmitten besteht. Es handelt sich hierbei um Melaminformaldehydkondensationsprodukte, die als Betonverflüssiger zugesetzt werden. Durch die Betonverflüssigung soll eine möglichst leicht pumpfähige Betonmischung erhalten werden, die extrem gut verfließt und möglichst schnell aushärtet.

Nachteilig bei diesen Produkten auf Melaminformaldehydbasis ist, daß ihre Verflüssigung nur $\approx$ 15 min anhält.

Hierzu kommt noch, daß die Anforderungen an ein Verfließmittel in einem selbstnivellierenden Fließestrich grundsätzlich anders sind als diejenigen an einen Betonverflüssiger. So ist bei einem Verfließmittel für selbstnivellierenden Fließestrich ein völlig homogenes Verfließen der Estrichmasse erforderlich. Insbesondere darf beim Verfließen kein Sedimentieren der schwereren Bestandteile auftreten. Das Verfließhilfsmittel für Betonestrich muß somit eine gewisse Tragfähigkeit für die Baustoffmischung aufweisen. Da es auf der Baustelle beim Aufbringen des Fließestrichs durchaus zu Verzögerungen kommen kann, ist es notwendig, daß das Fließestrichhilfsmittel auch noch 1 Stunde nach dem Zusatz zur Baustoffmischung seine volle Wirksamkeit behält.

Bei Hilfsmitteln auf Basis von Melaminformaldehydkondensationsprodukten tritt jedoch beim Verfließen eine Sedimentation der schwereren Bestandteile auf. Außerdem ist es nicht möglich, die Fließestrichmischung nach 1 Stunde durch Rühren wieder in einen einwandfrei fließfähigen Zustand zu bringen, so daß ein homogenes Verfließen erreicht wird. Man hat auch versucht, durch Zusatzmittel die Tragfähigkeit zu verbessern. Dies gelingt jedoch nur unvollkommen.

Überraschenderweise gelingt es nun, mit den erfindungsgemäßen Polymerisaten Verfließhilfsmittel für Baustoffmischungen bereitzustellen, die bereits in niedrigen Mengen zugesetzt, das gewünschte homogene Verfließen von Baustoffmischungen zu Estrichen mit absolut ebener Oberfläche bewirken. Es ist hierbei nicht notwendig, irgendwelche Hilfs- und Zusatzstoffe zuzusetzen, um das homogene Fließen zu erreichen. Besonders vorteilhaft bei diesen erfindungsgemäßen Polymerisaten ist, daß ihre volle Wirksamkeit auch noch 1 Stunde nach Zugabe zur Baustoffmischung erhalten ist.

Gegenstand der Erfindung sind daher wasserlösliche Copolymerisate, die zu

1) 5 bis 50 Mol-%, vorzugsweise 10 bis 40 Mol-% aus Resten der Formel I

```
-CH2-CR1-
     I
     R2
```

2) 0 bis 20 Mol-%, vorzugsweise 0 bis 15 Mol-% Resten der Formel II

```
     H
     I
-CH2-C-
     I
     O
     I
     C=O
     I
     R3
```

3) 5 bis 50 Mol-% vorzugsweise 20 bis 50 Mol-% Resten der Formel III

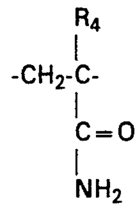

4) 5 bis 50 Mol-%, vorzugsweise 10 bis 40 Mol-% Resten der Formel IVa oder IVb

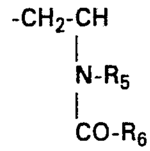 (IVa)

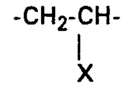 (IVb)

und

5) 2 bis 50 Mol-%, vorzugsweise 5 bis 30 Mol-% Resten der Formel V

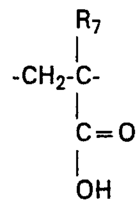

bestehen, wobei die Summe aus 1) bis 5) immer 100 Mol-% ergeben muß und deren Verwendung als Baustoff-Hilfsmittel, insbesondere als Verfließhilfsmittel, in selbstnivellierenden Estrichmischungen und Fußbodenausgleichsmassen.

In den Resten I bis VI der statistisch aufgebauten Polymerisaten bedeutet:

$R_1$ Wasserstoff oder eine Methylgruppe,
$R_2$ eine Alkoxycarbonylgruppe mit 1 bis 4 C-Atomen in der Alkoxygruppe, vorzugsweise eine Isobutyloxy- oder tert. Butyloxycarbonylgruppe, eine Alkanoyloxygruppe mit 1 bis 4 C-Atomen oder eine β-Hydroxyalkoxycarbonyl mit 2 oder 3 C-Atomen,
$R_3$ eine Methyl- oder eine Ethylgruppe,
$R_4$ Wasserstoff oder eine Methylgruppe,
$R_5$ und $R_6$ gleich oder verschieden, Wasserstoff, eine Methyl-, Ethylgruppe oder gemeinsam einen Trimethylen- oder Pentamethylenring bilden,
$R_7$ Wasserstoff oder eine Methylgruppe,
und
X ein Imidazol- oder Carbazolrest.

Die erfindungsgemäßen Polymerisate werden im Anschluß an die Polymerisation vorzugsweise noch mit niederen, aliphatischen Aldehyden, vorzugsweise Formaldehyd, und einem Sulfit, insbesondere Natriumhydrogensulfit, umgesetzt, wobei 0,1 bis 1 Mol, vorzugsweise 0,4 bis 0,8 Mol/pro Mol der Reste der Formel III an Aldehyd zugesetzt werden. Das Sulfit wird vorzugsweise äquimolar zum Aldehyd eingesetzt.

Besonders bevorzugt sind Umsetzungsprodukte von Copolymerisaten mit Formaldehyd und Natriumhydrogensulfit die sich von Ethylacrylat, Vinylacetat, Acrylamid, 1-Vinylpyrrolidon-2 und Acrylsäure ableiten.

Diese ausgezeichnete Wirksamkeit der erfindungsgemäßen Copolymerisate als Verfließhilfsmittel in Baustoffmischungen war völlig überraschend, da ähnlich aufgebaute Copolymerisate aus z. B. Acrylamid, AMPS und Vinylpyrrolidon völlig ungeeignet sind.

Die erfindungsgemäßen Polymerisate können in an sich bekannter Weise z. B. durch eine radikalische Polymerisation in wäßriger Lösung hergestellt werden.

Dabei wird die Polymerisation wie üblich in einer Schutzgasatmosphäre, vorzugsweise unter Stickstoff, durchgeführt. Die Polymerisationstemperatur soll zwischen 20 und 100° C, vorzugsweise zwischen 30 und 60 C, liegen.

Die Polymerisation kann durch die üblichen Polymerisationsinitiatoren gestartet werden, z .B. $K_2S_2O_8$, $H_2O_2$, $(NH_4)_2S_2O_8$, $H_2O_2$/Isoascorbinsäuregemisch. Pro 100 g Monomere werden in der Regel 1 bis 10 g Polymerisationsinitiator eingesetzt.

Zur Durchführung der Polymerisation werden die Monomeren vorzugsweise mit einer Konzentration im Bereich von 20 bis 40 Gew.-% an Gesamtmonomeren in Wasser gelöst. Zur besseren Verteilung der nicht wasserlöslichen Monomeren kann ein Tensid zugesetzt werden. Da es das Ziel ist, möglichst kurzkettige Polymerisate zu erhalten, werden relativ große Mengen eines Kettenlängenreglers eingesetzt. Hierzu können Hydrochinon, Isopropanol oder weitere geeignete Kettenlängenregler verwendet erden. Nach einer Stickstoffspülung wird die Reaktion gestartet. Die Copolymerisate werden im Anschluß an die Polymerisation vorzugsweise mit aliphatischen Aldehyden wie Formaldehyd, und einem Sulfit, insbesondere Natriumhydrogensulfit, umgesetzt, um Sulfonsäuregruppen in das Fertigprodukt einzuführen.

Hierbei wird der Aldehyd in Mengen von 0,1 bis 1,0 mol/pro Mol der Reste der Formel (III), d.h. pro Acrylamid eingesetzt. Das Natriumhydrogensulfit wird vorzugsweise äquimolar zum Aldehyd eingesetzt.

Die Umsetzungstemperatur sollte zwischen 20 und 100° C, vorteilhaft zwischen 40 und 80° C liegen.

Aus der wäßrigen Lösung kann das erfindungsgemäße Copolymerisat durch Abdestillieren des Wassers oder Ausfallen durch Mischen der Lösung mit einem wassermischbaren organischen Lösungsmittel, wie Methanol, Ethanol, Aceton oder dergleichen isoliert werden. Vorzugsweise wird jedoch die wäßrige Lösung des Reaktionsprodukts direkt, evtl. nach Einstellen einer gewünschten Konzentration, als Verfließhilfsmittel für Estrichmischungen eingesetzt.

Die erfindungsgemäßen Copolymerisate sind hervorragend geeignet als Hilfsmittel für Baustoffmischungen. Sie bewirken ein homogenes, gleichmäßiges Verfließen von Estrichmischungen zu einer völlig ebenen, glatten Oberfläche. Besonders vorteilhaft ist, daß diese erfindungsgemäßen Copolymerisate ihre Wirksamkeit auch noch nach 1 Stunde nach Zugabe des Polymerisats zur Baustoffmischung voll beibehalten. Es steht somit ein hervorragendes Verfließmittel für den Einsatz in Estrichmischungen und Fußbodenausgleichsmassen zur Verfügung.

Ein weiterer Gegenstand der Erfindung sind daher Baustoffmischungen, insbesondere Estrichmischungen, auf Basis Zement, Sand und Flugasche, die dadurch gekennzeichnet sind, daß sie als Verfließhilfsmittel die erfindungsgemäßen Copolymerisate enthalten.

Üblicherweise werden zur Formulierung von Fließestrichmischungen Verfließhilfsmittel, wie z. B. auf Melaminformaldehydkondensationsproduktbasis in Mengen von 0,4 bis 0,8 Gew.-%, bezogen auf den eingesetzten Feststoff, eingesetzt. Mit den erfindungsgemäßen Copolymerisaten ist es jedoch möglich, schon bei einer Einsatzmenge von nur 50 % der bisher üblichen Mengen ein hervorragendes Verfließen von Estrichmischungen zu erreichen. Das erfindungsgemäße Verfließhilfsmittel zeigt daher schon seine volle Wirksamkeit in Mengen von 0,05 bis 1 Gew.-%, vorzugsweise 0,15 bis 0,4 Gew.-%, bezogen auf Feststoffe. Die Estrichmischungen sind vorzugsweise auf Basis von Zement, Sand und Flugasche.

**Beispiel 1**

In einem 1 l-Polymerisationskolben mit Rührer, Rückflußkühler und Gaseinleitrohr für Inertgas werden 304,45 g entionisiertes Wasser vorgelegt. Danach werden 23,05 g Methylacrylat zugegeben. Diese Menge entspricht 0,2677 Mol Methylacrylat.

Anschließend werden
194,53 g 30 %-ige wäßrige Acrylamidlösung = 0,8210 Mol und
10,76 g Vinylacetat = 0,1249 Mol und
47,55 g 1-Vinylpyrrolidon-2 = 0,4284 Mol und
10,29 g Acrylsäure 0,1428 Mol zugegeben.

Diese Monomereinsatzmengen entsprechen einer Zusammensetzung von

15 Mol-% Methylacrylat,
7 Mol-% Vinylacetat,
46 Mol-% Acrylamid,
24 Mol-% 1-Vinylpyrrolidon-2,
8 Mol-% Acrylsäure.

Als Kettenlängenregler wird Hydrochinon mit einer Menge von 6 g 1 %-iger Lösung = 0,04 %, bezogen auf die Gesamtmonomereinwaage, eingesetzt. Um eine bessere Verteilung der nicht wasserlöslichen Monomeren zu erreichen, wird eine Lösung des Tensids Genapol® mit einer Menge von 3,38 g 1 %-ige Lösung 0,1 % auf die Summe von Vinylacetat- und Methylacrylateinwaage zugegeben.

Nach dem Ende der Zugaben wird mit einer Geschwindigkeit von 350 bis 400 UpM gerührt und es wird mit ca. 10 l/h Stickstoff gespült, um den Sauerstoff aus der Lösung zu verdrangen. Diese Stickstoffspülung wird während der gesamten Reaktionszeit beibehalten. Der Restsauerstoffgehalt beim Start der Polymerisation liegt vorteilhaft zwischen 1,2 und 1,8 ppm. Der pH-Wert des Reaktionsgemisches liegt bei etwa 2,8. Das Reaktionsgemisch wird auf 35° C erwärmt.

Nach einer 20-minütigen Stickstoffspülung mit ca. 10 l/h wird die Polymerisationsreaktion durch die Zugabe

von 0,75 g $K_2S_2O_8$ = 0,5 % (alle Initiatormengen sind bezogen auf die Monomereinwaage) gestartet. Nach 1 h werden weitere 0,75 g $K_2S_2O_8$ = 0,5 %, bezogen auf die Monomereinwaage, zugegeben. Nach 2 h werden 1,5 g $K_2S_2O_8$ = 1 % zugegeben. 4 h nach dem Reaktionsstart wird das Reaktionsgemisch gering viskos und es werden weitere 1,5 g $K_2S_2O_8$ = 1 % zugegeben. Nach 6 h ist die Reaktion beendet.

Das erhaltene Zwischenprodukt ist durch folgende Angaben charakterisiert:

| | |
|---|---|
| pH-Wert: | 2,1 |
| Konzentration: | 24,81 Gew.-% |
| rel. Viskosität ($VT_{24}$ Haake): | 100 mPa·s |

Im Anschluß an die Polymerisation wird die Umsetzung des Polymerisats mit Formaldehyd und Natriumhydrogensulfit durchgeführt.

Hierzu wird die Polymerlösung bei 35°C mit 14,48 g 50 %-iger Natronlauge und 0,47 g 38 %-iger Schwefelsäure auf einen pH-Wert von 9,2 eingestellt.

Danach werden 30,82 g 40 %-iger Formaldehydlösung zugegeben und es wird unter standigem Rühren auf 50°C aufgeheizt. Die Temperatur von 50°C wird 2 h lang beibehalten. Diese Formaldehydmenge entspricht 0,5 molaren Anteilen des eingesetzten Acrylamids.

Nun erfolgt eine Zugabe von 42,72 g $NaHSO_3$ und es wird auf 60°C Temperatur aufgeheizt. Die $NaHSO_3$-Menge ist äquimolar zur Formaldehydmenge.

Nach 1 h bei 60°C ist die Reaktion beendet.

Das Endprodukt ist durch folgende Angaben charakterisiert:

| | |
|---|---|
| pH-Wert: | 6,75 |
| Konzentration: | 29,59 Gew.-% |
| rel. Viskosität: | 100 mPa·s |
| Grenzviskosität: | 0,27 |

(bestimmt in 0,1 n NaCl Lösung und bei 25°C).

Die erhaltene Lösung kann direkt eingesetzt werden. Die Polymerisate 2 bis 31, deren Zusammensetzung Tabelle 1 zu entnehmen ist, können analog zu Beispiel 1 hergestellt werden.

In der Tabelle 1 werden folgende Abkürzungen verwendet:

| | |
|---|---|
| AMPS: | 2-Acrylamido-2-methylpropansulfonsäurenatriumsalz |
| NVPY: | 1-Vinylpyrrolidon-2 |
| AAM: | Acrylamid |
| EA: | Ethylacrylat |
| IBA: | Isobutylacrylat |
| TBA: | Tertiärbutylacrylat |
| HEA: | Hydroxyethylacrylat |
| HPA: | Hydroxypropylacrylat |
| VAC: | Vinylacetat |
| VMACAM: | N-Vinyl-N-methylacetamid |
| NVSA: | Natriumvinylsulfonat |
| NASS: | Natriumstyrolsulfonat |
| AS: | Acrylsäure |
| MAS: | Methacrylsäure |
| MA: | Methacrylat |
| HPMA: | Hydroxypropylmethacrylat |
| HEMA: | Hydroxyethylmethacrylat |
| VCLT: | Vinylcaprolactam |

**Tabelle 1**

| Beispiel Nr. | mol-%-1 | Mon.1 | mol-%-2 | Mon.2 | mol-%-3 | Mon.3 | mol-%-4 | Mon.4 | mol-%-5 | Mon.5 | Viskosität | molarer Anteil Formaldehyd bezogen auf den Acrylamidanteil |
|---|---|---|---|---|---|---|---|---|---|---|---|---|
| 1 | 15 | MA | 7 | VAC | 46 | AAM | 24 | NVPY | 8 | AS | 100 | 0,5 |
| 2 | 15 | HEA | 7 | VAC | 46 | AAM | 24 | NVPY | 8 | AS | 400 | 0,5 |
| 3 | 15 | EA | 7 | VAC | 46 | AAM | 24 | VMACAM | 8 | AS | 1200 | 0,5 |
| 4 | 15 | HPA | 7 | VAC | 46 | AAM | 24 | NVPY | 8 | AS | 300 | 0,5 |
| 5 | 15 | EA | 7 | VAC | 58 | AAM | 12 | VMACAM | 8 | AS | 13000 | 0,5 |
| 6 | 21,3 | EA | 0 | VAC | 36 | AAM | 21,3 | NVPY | 21,4 | AS | 400 | 0,1 |
| 7 | 21,3 | EA | 0 | VAC | 36 | AAM | 21,3 | NVPY | 21,4 | AS | 400 | 0,2 |

| | | | | | | | | | | | | |
|---|---|---|---|---|---|---|---|---|---|---|---|---|
| 8 | 21,3 | EA | 0 | VAC | 36 | AAM | 21,3 | NVPY | 21,4 | AS | 400 | 0,3 |
| 9 | 21,3 | EA | 0 | VAC | 36 | AAM | 21,3 | NVPY | 21,4 | AS | 400 | 0,4 |
| 10 | 21,3 | EA | 0 | VAC | 36 | AAM | 21,3 | NVPY | 21,4 | AS | 600 | 0,5 |
| 11 | 21,3 | EA | 0 | VAC | 36 | AAM | 21,3 | NVPY | 21,4 | AS | 400 | 0,6 |
| 12 | 21,3 | EA | 0 | VAC | 36 | AAM | 21,3 | NVPY | 21,4 | AS | 400 | 0,7 |
| 13 | 21,3 | EA | 0 | VAC | 36 | AAM | 21,3 | NVPY | 21,4 | AS | 400 | 0,8 |
| 14 | 21,3 | EA | 0 | VAC | 36 | AAM | 21,3 | NVPY | 21,4 | AS | 400 | 0,9 |
| 15 | 21,3 | EA | 0 | VAC | 36 | AAM | 21,3 | NVPY | 21,4 | AS | 400 | 1 |
| 16 | 30 | EA | 0 | VAC | 42 | AAM | 20 | NVPY | 8 | AS | 500 | 0,3 |
| 17 | 30 | EA | 0 | VAC | 42 | AAM | 20 | NVPY | 8 | AS | 500 | 0,7 |
| 18 | 30 | EA | 0 | VAC | 42 | AAM | 20 | NVPY | 8 | AS | 500 | 0,9 |
| 19 | 15 | EA | 7 | VAC | 46 | AAM | 24 | NVPY | 8 | MAS | 200 | 0,3 |
| 20 | 15 | EA | 7 | VAC | 46 | AAM | 24 | NVPY | 8 | MAS | 200 | 0,7 |
| 21 | 15 | EA | 7 | VAC | 46 | AAM | 24 | NVPY | 8 | MAS | 200 | 0,9 |
| 22 | 15 | HEMA | 7 | VAC | 46 | AAM | 24 | NVPY | 8 | AS | 400 | 0,7 |
| 23 | 15 | HEMA | 7 | VAC | 46 | AAM | 24 | NVPY | 8 | AS | 400 | 0,9 |
| 24 | 15 | EA | 7 | VAC | 38 | AAM | 20 | NVPY | 20 | AS | 600 | 0,3 |
| 25 | 15 | EA | 7 | VAC | 38 | AAM | 20 | NVPY | 20 | AS | 500 | 0,7 |
| 26 | 15 | EA | 7 | VAC | 38 | AAM | 20 | NVPY | 20 | AS | 500 | 0,9 |
| 27 | 15 | EA | 7 | VAC | 40 | AAM | 30 | NVPY | 8 | AS | 100 | 0,5 |
| 28 | 15 | EA | 7 | VAC | 40 | AAM | 30 | NVPY | 8 | AS | 100 | 0,3 |
| 29 | 15 | EA | 7 | VAC | 40 | AAM | 30 | NVPY | 8 | AS | 100 | 0,7 |
| 30 | 15 | EA | 7 | VAC | 38 | AAM | 10 | NVPY | 30 | AS | 7000 | 0,3 |
| 31 | 15 | EA | 7 | VAC | 38 | AAM | 30 | NVPY | 30 | AS | 6000 | 0,7 |

In den nachfolgenden Anwendungsbeispielen werden die erfindungsgemäßen Polymerisate mit bekannten Verfließmitteln für Baustoffgemische verglichen. Bei dieser Anwendung ist besonders wichtig, daß das Verfließmittel zu einem möglichst ausgedehnten Verteilen der Fließestrichmasse in dem betreffenden Raum führt.

Zur Messung dieses Verfließeffektes wird in anwendungstechnischen Tests das sogenannte Ausbreitmaß unter standardisierten Bedingungen verwendet. Außerdem ist es besonders wichtig, daß die Fließestrichmischung auch nach 1 Stunde noch ihre volle Wirksamkeit beibehalt. Aus diesem Grund wird das Ausbreitmaß nach 1 Stunde nochmals ermittelt. Das Ausbreitmaß nach 1 Stunde sollte im Idealfall genau so groß sein wie das Ausbreitmaß sofort nach dem Ansetzen der Fließestrichmischung. Um einen zügigen Baufortschritt zu gewährleisten, muß der Fließestrich nach 16 Stunden (d.h. am Morgen des nachsten Arbeitstages) begehbar sein. Aus diesem Grund wird beim Labortest für die Fließestrichanwendung die Begehbarkeit nach 16 Stunden überprüft.

Der Fließestrichtest wird folgendermaßen durchgeführt:

Es wird folgende Rezeptur eingesetzt:

| | | |
|---|---|---|
| | 175 g | Zement PZ 35 |
| | 175 g | Flugasche |
| | 725 g | Sand mit einer Körnung von 0 bis 2 mm |
| insgesamt | 1.075 g | Feststoff |

Die Zusatzmengen an Verfließmitteln (Polymerisaten) und Entschaumer werden auf diese Feststoffmenge von 1.075 g bezogen.

Es werden bei allen Anwendungsbeispielen folgende Zusätze verwendet:

0,22 % Verfließmittel (100 %-ig), bezogen auf die Grundrezepturmenge
0,1 % Entschaumer SB 2030 S, bezogen auf die Grundrezepturmenge

Die Wassermenge richtet sich nach der Fließfähigkeit des Estrichs. Man geht von 105 ml Anfangsgesamtwassermenge aus und dosiert je nach Bedarf zu. In dieser Anfangsgesamtwassermenge ist das Wasser enthalten, das das Polymerisat mit seiner Lösung mitbringt.

**Durchführung des Tests**

Der Sand, der Zement und die Flugasche werden in einem Labormischer 2 min trocken gemischt Die Polymerlösung, der Entschaumer und das Wasser werden in ein Becherglas eingewogen, verrührt und danach in die homogene Trockenmischung aus Sand, Zement und Flugasche gegeben, wobei die Trockenmischung gerührt wird.

Nach 2 min wird der Mischvorgang unterbrochen und man beurteilt die Probe danach, ob die Oberfläche

innerhalb von 15 bis 30 sec völlig glatt verfließt. Falls diese Eigenschaft noch nicht erreicht ist, wird Wasser in einer Abstufung von 5 ml zugegeben und anschließend wird diese Wassermenge 1 min verrührt. Danach wird der Rührvorgang wieder unterbrochen und es wird wieder beurteilt, ob die Oberfläche innerhalb von 15 bis 30 sec ganz glatt verfließt. Kurz vor dem Erreichen dieses völlig glatten Verfließens wird das Wasser nur noch in Schritten von 1 ml zugegeben.

Die Wassermenge, die benötigt wird, um ein völlig glattes Verfließen zu erreichen, sollte möglichst gering sein, um eine Rißbildung im Estrich zu vermeiden.

Nach dem Erreichen eines völlig glatten Verfließens wird das Ausbreitmaß bestimmt. Bis zu diesem Zeitpunkt muß der Estrich insgesamt 10 min gerührt worden sein. Im Anschluß erfolgt die Bestimmung des Ausbreitmaßes.

**Bestimmung des Ausbreitmaßes**

Ein Kunststoffzylinder mit einem Durchmesser von 7 cm und einer Hohe von 8,5 cm, der in der Mitte einer Kunststoffschale mit einem Durchmesser von 32 cm steht, wird mit dem Fließestrich vollgefüllt. Danach wird der Kunststoffzylinder angehoben, so daß der Fließestrich auseinanderfließen kann. Nach 3 min wird durch mehrere Messungen der durchschnittliche Durchmesser des ausgebreiteten Fließestrichfladens bestimmt. Dieses Maß gibt das Ausbreitmaß an. Beim Verfließen des Estrichs wird auch gleichzeitig dessen Oberfläche beurteilt, die möglichst glatt sein sollte. Das Verfließen des Estrichs sollte auch möglichst zu einer runden Form führen.

Nach Bestimmung des Ausbreitmaßes wird die gesamte Estrichmasse in einen Polystyrolbecher gefüllt und 1 Stunde lang stehengelassen. Nach dieser Zeit, die von der Zugabe der Polymerlösung zur Trockenmischung an gerechnet wird, wird die Oberfläche des Estrichs auf eine evtl. Hautbildung geprüft. Anschließend wird der Estrich gut durchgerührt, wobei man beurteilt, ob der Estrich schon weitgehend abgebundenist. Der Estrich sollte durch Rühren wieder gut fließfähig zu machen sein.

Im Anschluß bestimmt man wieder, wie oben beschrieben, das Ausbreitmaß und beurteilt die Oberfläche.

Zum Abschluß wird eine Probe von 100 g Estrich in einen Polystyrolbecher gefüllt und diese Probe läßt man 16 Stunden aushärten.

**Prüfung der Begehbarkeit**

Die Begehbarkeit der Probe wird geprüft, indem man mit dem Finger fest auf die Oberfläche drückt. Gibt die Oberfläche des Estrichs nach, so ist er nicht begehbar.

Für die Untersuchungen wurden die in Tabelle 2 angegebenen Polymerisate eingesetzt:

Als Vergleichsbeispiel C wurde ein handelsübliches Melamin-Formaldehyd-Kondensationsprodukt, das für den Einsatz als Betonverflüssiger vorgesehen ist (Vergleichsprodukt), verwendet.

In der Tabelle 2 sind die Ergebnisse der Untersuchungen mit diesen Produkten zusammengestellt:

**Tabelle 2**

| Verfließmittel gemäß Beispiel Nr. | Wasserverbrauch | Ausbreitmaß unmittelbar nach dem Ansetzen des Estrichs in ml | Ausbreitmaß 1 h nach der Zugabe des Verfließmittels in ml | Bemerkungen zum Verfließen nach 1 h | Begehbarkeit |
|---|---|---|---|---|---|
| 1 | 128 | 235 | 240 | durch Rühren leicht zu verflüssigen fließt glatt ohne Sedimentation | begehbar |
| 2 | 127 | 245 | 240 | " | " |
| 4 | 125 | 225 | 235 | " | " |
| 7 | 129 | 270 | 240 | " | " |
| 8 | 125 | 250 | 220 | " | " |
| 13 | 125 | 260 | 240 | " | " |
| 19 | 135 | 225 | 230 | " | " |
| 21 | 130 | 220 | 250 | " | " |
| 23 | 129 | 220 | 245 | " | " |
| 25 | 125 | 255 | 230 | " | " |
| 31 | 127 | 245 | 240 | " | " |
| C | 118 | 230 | 160 | unebene Oberfläche, starke Wölbung des Estrichfladens | " |

Die Ergebnisse der anwendungstechnischen Untersuchungen zeigen eindeutig die überlegene Wirksamkeit der erfindungsgemäßen Verfließmittel gegenüber dem Vergleichsprodukt C.

Die erfindungsgemäßen Produkte verfließen vorteilhafterweise völlig glatt, ohne Sedimentation.

Besonders deutlich wird die Überlegenheit der erfindungsgemäßen Produkte bei der Bestimmung des Ausbreitmaßes 1 Stunde nach der Zugabe des Verfließmittels.

Hier weisen alle erfindungsgemäßen Produkte noch das unwesentlich veranderte hohe anfangliche Ausbreitmaß auf und bewirken ein völlig glattes Verfließen des Estrichs ohne Sedimentation.

Das Vergleichsprodukt C hingegen führt zu einem Estrichfladen mit unebener Oberfläche und einer starken Wölbung.

Die erfindungsgemäßen Produkte erreichen also eine weitaus höhere Wirksamkeit als die bisher bekannten Produkte und stellen somit eine wesentliche Verbeserung des Standes der Technik dar.

## Patentansprüche

1. Wasserlösliche Copolymerisate, die zu

1) 5 bis 50 Mol-%, vorzugsweise 10 bis 40 Mol-% aus Resten der Formel I

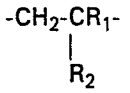

2) 0 bis 20 Mol-%, vorzugsweise 0 bis 15 Mol-% Resten der Formel II

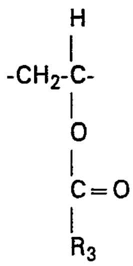

3) 5 bis 50 Mol-% vorzugsweise 20 bis 50 Mol-% Resten der Formel III

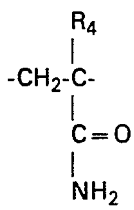

4) 5 bis 50 Mol-%, vorzugsweise 10 bis 40 Mol-% Resten der Formel IVa oder IVb

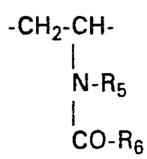 (IVa) 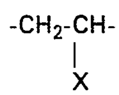 (IVb)

5) 2 bis 50 Mol-%, vorzugsweise 5 bis 30 Mol-% Resten der Formel V

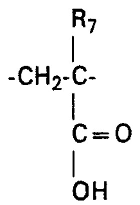

bestehen, wobei in den Resten I bis V

$R_1$ Wasserstoff oder eine Methylgruppe,

$R_2$ eine Alkoxycarbonylgruppe mit 1 bis 4 C-Atomen in der Alkoxygruppe, eine Alkanoyloxygruppe mit 1 bis 4 C-Atomen oder eine β-Hydroxyalkoxycarbonyl mit 2 oder 3 C-Atomen,

$R_3$ eine Methyl- oder eine Ethylgruppe,

$R_4$ Wasserstoff oder eine Methylgruppe,

$R_5$ und $R_6$ gleich oder verschieden, Wasserstoff, eine Methyl-, Ethylgruppe oder einen gemeinsamen Trimethylen- oder Pentamethylenring,

$R_7$ Wasserstoff oder eine Methylgruppe,

und

X ein Imidiazol- oder Carbazolrest bedeuten und wobei die Summe aus 1) bis 5) immer 100 mol-% ergeben muß.

2. Copolymerisate gemäß Anspruch 1, dadurch gekennzeichnet, daß die Polymerisate mit niederen, aliphatischen Aldehyden und Sulfit umgesetzt werden, wobei 0,1 bis 1 Mol pro Mol der Reste der Formel III an Aldehyd zugesetzt werden.

3. Wasserlösliche Copolymerisate nach wenigstens einem der vorliegenden Ansprüche, dadurch gekennzeichnet, daß sie aus

1) 10 bis 40 Mol-% Resten der Formel I
2) 0 bis 15 Mol-% Resten der Formel II
3) 20 bis 50 Mol-% Resten der Formel III
4) 10 bis 40 Mol-% Resten der Formel IVa oder IVb
5) 5 bis 30 Mol-% Resten der Formel V

bestehen, die mit Formaldehyd und Na-hydrogensulfit umgesetzt wurden.

4. Baustoffmischungen, insbesondere Estrichmischungen, auf Basis Zement, Sand und Flugasche, dadurch gekennzeichnet, daß sie als Verfließhilfsmittel die Copolymerisate nach wenigstens einem der vorliegenden Ansprüche enthalten.

6. Baustoffmischungen nach wenigstens einem der vorliegenden Ansprüche, dadurch gekennzeichnet, daß sie das Verfließhilfsmittel in Mengen von 0,15 - 0,4 Gew.-% enthalten.

**Claims**

1. Water-soluble copolymers consisting of

1) 5 to 50 mol % of radicals of the formula I

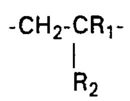

2) 0 to 20 mol % of radicals of the formula II

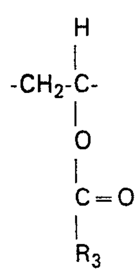

3) 5 to 50 mol % of radicals of the formula III

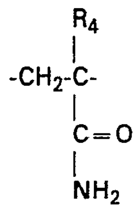

4) 5 to 50 mol % of radicals of the formula IVa or IVb

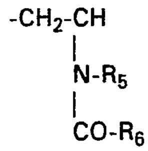 (IVa) 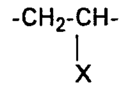 (IVb)

5) 2 to 50 mol % of radicals of the formula V

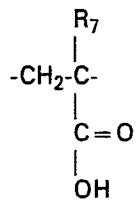

wherein in the radicals I to V,

$R_1$ denotes hydrogen or a methyl group,

$R_2$ denotes an alkoxycarbonyl group with 1 to 4 C atoms in the alkoxy group, an alkanoyloxy group with 1 to 4 C atoms or a β-hydroxyalkoxycarbonyl with 2 or 3 C atoms,

$R_3$ denotes a methyl or an ethyl group,

$R_4$ denotes hydrogen or a methyl group,

$R_5$ and $R_6$ are identical or different and denote hydrogen, a methyl or ethyl group or a common trimethylene or pentamethylene ring,

$R_7$ denotes hydrogen or a methyl group and

X denotes an imidazole or carbazole radical and wherein the sum of 1) to 5) must always amount to 100 mol %.

2. Copolymers according to Claim 1, characterised in that the polymers are reacted with low, aliphatic aldehydes and sulphite, 0.1 to 1 mol, per mol of the radicals of the formula III, of aldehyde being added.

3. Water-soluble copolymers according to at least one of the preceding claims, characterised in that they consist of

1) 10 to 40 mol % of radicals of the formula I
2) 0 to 15 mol % of radicals of the formula II
3) 20 to 50 mol % of radicals of the formula III
4) 10 to 40 mol % of radicals of the formula IVa or IVb
5) 5 to 30 mol % of radicals of the formula V,

which have been reacted with formaldehyde and Na hydrogen sulphite.

4. Mixtures of building materials, in particular screed mixtures, based on cement, sand and fly ash, characterised in that they contain the copolymers according to at least one of the preceding claims as flow-control auxiliaries.

5. Mixtures of building materials according to Claim 4, characterised in that they contain the flow-control auxiliary in quantities of 0.05 - 1 % by weight, based on solids.

6. Mixtures of building materials according to at least one of the preceding claims, chracterised in that they contain the flow-control auxiliary in amounts of 0.15 - 0.4 % by weight.

## Revendications

1. Copolymérisats hydrosolubles, qui sont constitués de

1) 5 à 50 moles % de restes de formule I

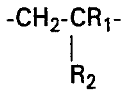

2) 0 à 20 moles % de restes de formule II

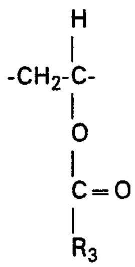

3) 5 à 50 moles % de restes de formule III

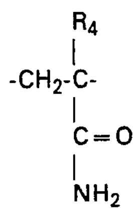

4) 5 à 50 moles % de restes de formule IVa ou IVb

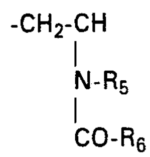 (IVa) 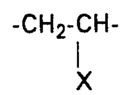 (IVb)

5) 2 à 50 moles % de restes de formule V

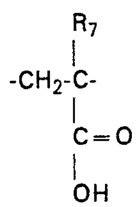

restes I à V dans lesquels:

$R_1$ est l'hydrogène ou un groupe méthyle,

$R_2$ est un groupe alkoxycarbonyle ayant 1 à 4 atomes de carbone dans le groupe alkoxy, un groupe alcanoyloxy ayant 1 à 4 atomes de carbone ou un groupe β-hydroxyalhoxycarbonyle de 2 ou 3 atomes de carbone,

$R_3$ est un groupe méthyle ou un groupe éthyle,

$R_4$ est l'hydrogène ou un groupe méthyle,

$R_5$ et $R_6$, identiques ou différents, représentent l'hydrogène, un groupe méthyle, éthyle ou un noyau triméthylène ou pentaméthylène commun,

$R_7$ est l'hydrogène ou un groupe méthyle et

X est un reste imidazole ou carbazole,

la somme de 1) à 5) devant toujours être égale à 100 moles %.

2. Copolymérisats suivant la revendication 1, caractérisés en ce que les polymérisats sont amenés à réagir avec des aldéhydes aliphatiques inférieurs et un sulfite, en sorte que 0,1 à 1 mole, par mole des restes de formule III, s'additionnent sur l'aldéhyde.

3. Copolymérisats hydrosolubles selon au moins l'une des revendications précédentes, caractérisés en ce qu'ils sont constitués de

1) 10 à 40 moles % de restes de formule I

2) 0 à 15 moles % de restes de formule II

3) 20 à 50 moles % de restes de formule III

4) 10 à 40 moles % de restes de formule IVa ou IVb
5) 5 à 30 moles % de restes de formule V,
qui ont été amenés à réagir avec le formaldéhyde et l'hydrogénosulfite de sodium.

4. Mélanges pour matériaux de construction, notamment mélanges pour la réalisation d'aires en ciment, à base de ciment, de sable et de cendres volantes, caractérisés en ce qu'ils contiennent comme agents auxiliaires d'écoulement les copolymérisats suivant au moins l'une des revendications précédentes.

5. Mélanges pour matériaux de construction suivant la revendication 4, caractérisés en ce qu'ils contiennent l'agent auxiliaire d'écoulement en quantités de 0,05 à 1 % en poids par rapport aux matières solides.

6. Mélanges pour matériaux de construction suivant au moins l'une des revendications précédentes, caractérisés en ce qu'ils contiennent l'agent auxiliaire d'écoulement en quantités de 0,15 à 0,4 % en poids.